# EUROPÄISCHE PATENTANMELDUNG

(11) **EP 2 613 103 A1**
(43) Veröffentlichungstag der Anmeldung: **10.07.2013**
(21) Anmeldenummer: 12196972.9
(22) Anmeldetag: 13.12.2012
(51) Int. Cl.: F24J 2/04

(54) **Solarpflaster**

(30) Priorität: 04.01.2012 DE 102012100051
(71) Anmelder: Pebüso-Betonwerke H. Büscher GmbH & Co. KG, 48155 Münster (DE)
(72) Erfinder: Büscher, Henrich, 48155 Münster (DE)
(74) Vertreter: Habbel, Ludwig

(57) **Zusammenfassung**

Bei einer Pflasterung einer Bodenfläche, wobei die Pflasterung (1) eine Mehrzahl von Pflastersteinen (8) aufweist, schlägt die Erfindung vor, dass die Pflasterung Pflastersteine (8) aufweist, welche die Absorption einstrahlender Sonnenenergie unterstützend ausgestaltet sind, und dass von einem Wärmeträger durchströmte Kollektorrohre (4) vorgesehen sind, welche an die Pflastersteine (8) thermisch angekoppelt sind, so dass der Wärmeträger mittels der durch die Pflastersteine (8) gelangten Sonnenenergie erwärmt werden kann.

## Beschreibung

Die Erfindung betrifft eine Anordnung zur Gewinnung solarer Wärme. Zu diesem Zweck werden so genannte Solarkollektoren verwendet, im Unterschied zu so genannten Solarmodulen, die zur Erzeugung von photovoltaischem elektrischem Strom dienen.

Es ist bekannt, Solarkollektoren auf Dächern aufzustellen. Es handelt sich bei den Solarkollektoren um windgeschützt abgedeckte und dem Sonnenlicht ausgesetzte Rohrleitungen, die von einem Wärmeträgerfluid durchströmt werden. Die Beheizung der Kollektorrohre erfolgt direkt durch das Sonnenlicht, und die windgeschützte Anordnung verhindert eine Auskühlung der Kollektorrohre durch Wind. Die Solarkollektoren sind insofern vorteilhaft, als sie einen hohen Wirkungsgrad aufweisen und die Erzielung hoher Temperaturen ermöglichen. Üblicherweise ist eine Heizungsanlage im Bodenbereich bzw. im Keller eines Gebäudes angeordnet. Zur Anbindung der Dachkollektoren an die Heizungsanlage sind Leitungsstränge erforderlich, die vom Dach bis in den Keller verlaufen. Auf einigen Dächern kann die Anordnung von Solarkollektoren - beispielsweise aus statischen Gründen oder aus Gründen des Denkmalschutzes - unzulässig sein.

Der Erfindung liegt die Aufgabe zugrunde, die Gewinnung solarer Wärmeenergie zu ermöglichen, wobei auffällige sichtbare Änderungen an einem Gebäude vermieden werden sollen.

Diese Aufgabe wird durch eine Pflasterung mit den Merkmalen des Anspruchs 1 gelöst,

Die Erfindung schlägt mit anderen Worten vor, eine Pflasterung mit von der Sonne beschienenen, und die Wärme aus dem Sonnenlicht sammelnden Pflastersteinen zu erstellen. Aus diesem Grund kann eine vorschlagsgemäß ausgestaltete Pflasterung als Solarpflaster bezeichnet werden. Als "Wärme sammelnd" ist dabei bezeichnet, dass die Pflastersteine vorschlagsgemäß so ausgestaltet sind, dass sie die Absorption einstrahlender Sonnenenergie unterstützen. Dies bedeutet, dass die Pflastersteine Reflektionsverluste möglichst vermeiden, wie dies ansonsten bei z. B. spiegelnden oder sehr hellen - z. B. weißen - Oberflächen der Pflastersteine der Fall sein kann.

Vorschlagsgemäß sind weiterhin Kollektorrohre vorgesehen, die von einem Wärmeträger durchströmt sind, und welche an die Pflastersteine thermisch angekoppelt sind, so dass der Wärmeträger mittels der durch die Pflastersteine gelangten Sonnenenergie erwärmt werden kann. Der Begriff der Kollektorrohre ist dabei nicht notwendigerweise an eine tatsächliche Mehrzahl von Rohren gebunden, sondern bezeichnet auch mehrere, beispielsweise benachbart verlaufende, Rohrleitungsabschnitte einer einzigen Rohrleitung, z. B. wenn diese in mehreren Windungen verläuft, z. B. einen mäandernden, serpentinen- oder spiralförmigen Verlauf aufweist.

Die Absorption einstrahlender Sonnenenergie kann unmittelbar in den Pflastersteinen selbst erfolgen, z. B. indem diese dunkel gefärbt sind, so dass diese sich erwärmen, wobei die Wärme dann mittels Wärmeleitung an die Kollektorrohre und in den Wärmeträger gelangt.

Die Absorption einstrahlender Sonnenenergie kann jedoch auch in einer anderen Schicht der Pflasterung erfolgen. Die Pflastersteine unterstützen in diesem Fall die Absorption der einstrahlenden Sonnenenergie durch Leitelemente, so dass die Pflastersteine das Sonnenlicht oder dessen Wärme weiterleiten. Beispielsweise können in den Pflastersteinen zu diesem Zweck Glasfasern vorgesehen sein. Oder die Leitelemente können z. B. als metallische Leiter ausgestaltet sein, welche die im Pflasterstein vorhandene Wärme in tiefere Schichten weiterleiten. Oder die Pflastersteine können eine besondere Struktur hinsichtlich ihres Aufbaus aufweisen. Jedenfalls soll durch die Leitelemente oder die Struktur ermöglicht werden, dass die an der Oberfläche eingestrahlte solare Energie möglichst verlustarm als Wärme in die Tiefe der Pflastersteine und ggf. bis zur Unterseite der Pflastersteine geleitet wird. Die Absorption dieser weitergeleiteten Sonnenenergie erfolgt dann nicht in den Pflastersteinen, sondern in einem nachgeschalteten, tiefer liegenden Element der Pflasterung. Beispielsweise kann die weitergeleitete Sonnenenergie auf die Kollektorrohre gerichtet sein, oder auf eine Bettungsmasse wie z. B. eine Mörtelschicht, in welche die Kollektorrohre eingebettet sind, und welche durch die weitergeleitete Sonnenenergie erwärmt wird und mittels Wärmeleitung die Wärme an die Kollektorrohre abgibt.

Die Erfindung geht von der Überlegung aus, dass im Vergleich zu den genannten Solarkollektoren die thermische Ausbeute vergleichsweise bescheiden sein wird. Die Kollektorrohre der vorschlagsgemäßen Pflasterung sind nämlich dem Sonnenlicht gegebenenfalls nicht direkt ausgesetzt, sondern werden vielmehr indirekt, durch Wärmeleitung, beheizt. Es kann jedoch ein Temperaturniveau erreicht werden, welches einen möglichst effizienten Betrieb einer Wärmepumpe ermöglicht, ohne dass hierzu tiefe Bohrungen ins Erdreich eingebracht werden müssen. Diese Bohrungen sind ansonsten erforderlich, um ganzjährig eine Mindesttemperatur sicherzustellen, die auch bei winterlichen Frosteinflüssen nicht unterschritten wird und die einen effizienten Betrieb einer Wärmepumpe sicherstellt. Vorschlagsgemäß kann dieses Temperaturniveau auch nahe der Bodenoberfläche erzielt werden, indem nämlich mittels der Pflasterung die Sonneneinstrahlung, auch bei diffuser Strahlung, zum Erwärmen des Wärmeträgerfluids genutzt wird. Aufgrund der vergleichsweise großen Flächen, die durch Hofflächen, Gehwege u. dgl. zur Verfügung stehen, kann trotz des vergleichsweise geringen Temperaturniveaus doch insgesamt eine ausreichend große Wärmemenge genutzt werden, um ein Wärmeträgerfluid der Wärmepumpe entsprechend aufheizen zu können. Dabei können entweder die Kollektorrohre als Verdampferrohre der Wärmepumpe dienen, in denen das Fluid Wärme aufnimmt und verdampft. Oder die Kollektorrohre können dazu dienen, die Wärme zu einem Wärmetauscher bzw. Verdampfer der Wärmepumpe zu transportieren, wobei in diesem Fall das die Kollektorrohre durchströmende Fluid ein anderes sein kann als das im Kreisprozess der Wärmepumpe geführte Fluid, welches abwechselnd verdampft und kondensiert wird.

Es kann vorgesehen sein, dass die Pflastersteine Ausnehmungen aufweisen, in welche die Kollektorrohre zumindest mit einem Anteil ihres Umfangs eintauchen. Somit kann eine möglichst direkte Beheizung der Kollektorrohre durch die Pflastersteine erfolgen. Beispielsweise können an der Unterseite der Pflastersteine U-förmige, nach unten offene Nuten vorgesehen sein, oder es können sich Bohrungen durch die Pflastersteine erstrecken, so dass jedenfalls die Pflastersteine den Kollektorrohren direkt anliegen können.

Vorteilhaft kann eine Wärmeleitmasse zwischen den Kollektorrohren und den Pflastersteinen angeordnet sein. Hierdurch können Herstellungstoleranzen der Pflastersteine und der Kollektorrohre ausgeglichen werden, zudem kann ein Kollektorrohr problemlos, nämlich mit Spiel, in den Ausnehmungen der Pflastersteine montiert werden. Die Wärmeleitmasse überbrückt dieses Spiel und stellt anschließend einen guten Wärmeübergang zwischen den Pflastersteinen und den Kollektorrohren sicher.

Statt einer Verlegung der Kollektorrohre in Ausnehmungen der Pflastersteine kann jedoch vorgesehen sein, unterhalb der Pflastersteine eine Mörtelschicht anzuordnen und mit dieser Mörtelschicht die Kollektorrohre zu umgeben. Bei der Verlegung der Pflastersteine muss daher nicht auf eine exakt fluchtende Ausrichtung von deren Ausnehmungen geachtet werden, um die Kollektorrohre darin aufnehmen zu können. Vielmehr kann zunächst die Mörtelschicht in oder auf den Boden gebracht werden und die Kollektorrohre werden in den weichen Mörtel eingedrückt. Oder es werden die Kollektorrohre zunächst verlegt und anschließend mit der weichen, fließfähig eingestellten Mörtelmasse umgossen. Die auf die Pflastersteine einstrahlende Sonnenenergie dient zur Erwärmung der Mörtelschicht, die ihrerseits die Kollektorrohre beheizt.

Dabei wird vorteilhaft eine besonders intensive Wärmeübertragung zwischen den Pflastersteinen und der Mörtelschicht durch eine Vergrößerung der Kontaktfläche zwischen den Pflastersteinen und der Mörtelschicht ermöglicht. Die Pflastersteine können daher an ihrer Unterseite mit Nuten, Rippen, Noppen o. dgl. versehen sein, um eine entsprechend vergrößerte Oberfläche an ihrer Unterseite aufzuweisen und durch diese vergrößerte Oberfläche einen möglichst intensiven Wärmeübergang zum Mörtel zu ermöglichen.

Die Mörtelschicht selbst ist vorzugsweise ebenfalls besonders gut Wärme leitend ausgestaltet, um die Wärmeübertragung zu Kollektorrohren zu ermöglichen, die in den Mörtel eingebettet sind. Hierzu weist der Mörtel eine entsprechende Zusammensetzung mit den geeigneten Zuschlagstoffen auf, welche die Wärmeleitfähigkeit des Mörtels positiv beeinflussen.

Die Mörtelschicht kann grundsätzlich dauerhaft weich und plastisch ausgestaltet sein, vorzugsweise jedoch ist sie aushärtend eingestellt, so dass sie nach ihrer Aushärtung eine tragfähige Schicht unterhalb der Pflastersteine bildet, die eine dauerhafte Beibehaltung der Lage der Pflastersteine sichert. Die Tragfähigkeit der Mörtelschicht kann durch deren Schichtdicke und deren Zusammensetzung der verwendeten Zuschlagstoffe in an sich bekannter Weise beeinflusst und bestimmt werden.

Dabei ist dieser Mörtel vorzugsweise derart eingestellt, dass er später problemlos aufgenommen und zumindest teilweise aufgebrochen werden kann, beispielsweise, indem der Mörtel im ausgehärteten Zustand eine gewisse Sprödigkeit aufweist. Dementsprechend ist es nach einiger Benutzungsdauer der Pflasterung problemlos möglich, einen Bereich von Pflastersteinen aufzunehmen, den darunter befindlichen Mörtel aufzubrechen, ohne dabei die verlegten Kollektorrohre zu zerstören, die Kollektorrohre neu anzuordnen, und um ein beispielsweise zu errichtendes Hindernis herum zu führen. Auf diese Weise können nachträglich beispielsweise Masten errichtet, Bäume gepflanzt o. dgl. Hindernisse in die Pflasterung eingesetzt werden, die sich nach unten ins Erdreich erstrecken und die deswegen als Hindernisse bezeichnet werden, weil sie den ursprünglich vorgesehenen Verlauf der Kollektorrohre behindern. Dadurch, dass die Mörtelschicht problemlos zerstört werden kann, ohne die Kollektorrohre zu schädigen, ist die Verlegung der Kollektorrohre um dieses Hindernis herum möglich, das Einbringen einer neuen Mörtelschicht, und die Schließung des Pflasters mit den ursprünglich dort vorhandenen Pflastersteinen, wobei lediglich je nach Größe des errichteten Hindernisses einige der ursprünglich verlegten Pflastersteine nun nicht mehr verwendet werden.

Betreffend die Ausgestaltung der Mörtelschicht sind beispielsweise folgende drei - rein beispielhaften - Zusammensetzungen verwendbar:
■ Erstens kann die Mörtelschicht Beton mit Portlandzement enthalten. Hierdurch wird eine nahezu porenfreie Ausgestaltung der Mörtelschicht ermöglicht. Zudem ist diese Mörtelschicht sehr hart und dementsprechend belastbar.
■ Zweitens kann die Mörtelschicht Trasszement mit einem Zuschlag von Kiessand enthalten. Diese abgemagerte Ausgestaltung der Mörtelschicht mit reduzierter Festigkeit erleichtert das spätere Aufnehmen der Mörtelschicht, indem diese mit einfachen Mitteln zerstört werden kann, nämlich mit Handwerkzeugen wie Spaten oder Spitzhacke aufgebrochen werden kann. Dabei kann so schonend vorgegangen werden, dass die verlegten Kollektorrohre nicht beschädigt werden.
■ Drittens kann die Mörtelschicht als Kalkmörtel ausgestaltet sein. Die Festigkeit ist in diesem Fall besonders gering und die Mörtelschicht kann dementsprechend besonders einfach und mit dementsprechend vergleichsweise geringem Kraftaufwand aufgebrochen werden. Ein solcher Untergrund wird in der Praxis beispielsweise bei Kommunen unter der Pflasterung von kommunalen Gehwegen benutzt, um die Gehwegplatten problemlos aufnehmen und Ausbesserungsarbeiten durchführen zu können. Für die vorschlagsgemäßen Anwendungsfall bedeutet diese Ausgestaltung der Mörtelschicht, dass sie zerstört werden kann und dabei die Kollektorrohre besonders zuverlässig vor Beschädigungen geschützt werden können, da die Krafteinwirkung, die zur Zerstörung der Mörtelschicht erforderlich ist, besonders gering ist.

Auf der Mörtelschicht kann vorteilhaft eine Ausgleichsschicht vorgesehen sein, die aus einem im Vergleich zur Mörtelschicht dünnflüssigeren Material besteht. Während die Mörtelschicht die gewünschte Tragfähigkeit für die Pflasterung schafft, dient die Ausgleichsschicht jedenfalls dazu, Unebenheiten in der Oberfläche der Mörtelschicht auszugleichen, so dass in bzw. auf die Ausgleichsschicht die Pflasterung verlegt werden kann. Beispielsweise kann die Ausgleichsschicht aus einem Zementleim bestehen.

Unterhalb der Kollektorrohre kann vorteilhaft eine thermische Isolierschicht vorgesehen sein, um Wärmeverluste an das darunter befindliche Erdreich zu minimieren. Die thermische Isolierschicht kann beispielsweise in Form von Platten aus einem Schaumwerkstoff ausgestaltet sein, z. B. aus expandiertem Polystyrol, Polypropylen oder dergleichen.

Durchbrechungen können in der thermischen Isolierschicht vorteilhaft vorgesehen sein, um keine Wassersperre im Boden zu erzeugen, sondern eine Versickerung von Niederschlägen zu ermöglichen. Diese als so genannte Versickerungsöffnungen dienenden Durchbrechungen können z. B. makroskopisch als Bohrungen, Schlitze oder dergleichen in der thermischen Isolierschicht ausgestaltet sein, oder sie können im Unterschied dazu mikroskopisch in dem Material vorgesehen sein, z. B. indem das Material dementsprechende Poren aufweist, welche die gewünschte Durchlässigkeit von oben nach unten durch das Material ermöglichen.

Die Kollektorrohre können vorzugsweise in Form mehrerer separater Strömungskreise angeordnet sein, so dass beispielsweise je nach Tageszeit bzw. Jahreszeit die Flächen der Pflasterung, die am intensivsten von der Sonne beschienen werden, zur Ausnutzung der thermischen Energie benutzt werden und die anderen, weniger intensiv von der Sonne bestrahlten Flächen nicht genutzt werden, um hierdurch eine unerwünschte Abkühlung des Wärmeträgerfluids zu vermeiden. Dazu kann die Durchströmung der einzelnen Strömungskreise mittels Sperrventilen durch deren Öffnung oder Schließung ermöglicht oder verhindert werden.

Um die Abdeckung der Pflasterung, die sich durch Schnee und Eis ergeben kann und die Sonneneinstrahlung auf die Pflasterung blockieren kann, zu entfernen, kann neben einer mechanischen Abreinigung der Pflasterung vorgesehen sein, das Wärmeträgerfluid in geradezu umgekehrter Wirkungsrichtung Wärme an die Pflasterung abgeben zu lassen, so dass die Pflasterung durch die dementsprechende Tauwirkung schnee- und eisfrei gehalten wird. Dies ermöglicht nicht nur die Einstrahlung von Sonnenenergie auf das Pflaster, da die Pflasterfläche nun nicht mehr abgedeckt ist, sondern bewirkt zudem auch einen Sicherheitsgewinn für Fahrzeuge oder Personen. Wenn die Kollektorrohre in Form mehrerer separater Strömungskreise angeordnet sind, kann der zum Beheizen erforderliche Energiebedarf minimiert werden, indem lediglich die entsprechend erforderlichen Flächenabschnitte der gepflasterten Fläche in diesem Reversierbetrieb beheizt werden.

Der Mörtel ist vorzugsweise als Vergussmörtel ausgestaltet, so dass eine schnelle und problemlose Verarbeitung des Mörtels auch auf großen Flächen möglich ist. Aufgrund seiner wärmeleitenden Eigenschaften ermöglicht er auch im Reversierbetrieb, wenn also die Pflasterung durch das Wärmeträgermedium beheizt wird, einen guten Wärmeübergang zwischen Pflaster und Rohrleitung bzw. Wärmeträgermedium. Der vorliegende Vorschlag geht davon aus, dass, falls ein Reversierbetrieb vorgesehen ist, die Wärmeabgabe an das Pflaster nur auf vergleichsweise kurze Zeiträume begrenzt werden muss, nämlich nur, wenn neue Schnee- oder Eismengen durch entsprechende Niederschläge entstehen, während nach dem Abtauen des Pflasters, in der niederschlagsfreien Zeit, gerade auch an klaren Wintertagen, eine erhebliche Strahlungsintensität dazu führt, dass Wärmeenergie durch das vorschlagsgemäße Solarpflaster gewonnen werden kann.

Eine Anordnung zur Gewinnung thermischer Energie kann beispielsweise wie folgt aufgebaut werden:
■ Ein Untergrund wird präpariert, auf dem die Pflasterung erstellt werden soll. Der Untergrund kann z. B. durch eine Auskofferung geschaffen werden, so dass nach dem anschließenden Aufbau der Pflasterung die Oberseite des Pflasters mit angrenzenden, vorhandenen Bodenflächen niveaugleich abschließt. Beispielsweise kann von einer bereits vorhandenen, großflächigen Pflasterung ein Teilbereich aufgenommen werden und der in diesem Teilbereich freigelegte Boden ausgehoben und planiert werden. Der Untergrund kann horizontal verlaufen, wie dies bei gepflasterten Hofflächen oder Wegen üblich ist, er kann jedoch alternativ dazu auch mit einer gewissen Neigung verlaufen, um die Intensität der auf das Pflaster gelangenden Sonnenlicht-Einstrahlung zu erhöhen.
■ Der erwähnte Untergrund, auf den dann die mehrere Schichten aufweisende Pflasterung aufgebracht wird, kann z. B. unmittelbar der Erdboden sein oder ein vorhandener Bodenbelag, beispielsweise in Form einer Pflasterung, einer Asphaltschicht oder dergleichen.
■ Eine auf den Untergrund aufgelegte thermische Isolierschicht kann die unterste Schicht der mehrere Schichten aufweisenden Pflasterung bilden, um Wärmeverluste in das Erdreich zu minimieren.
■ Auf den Untergrund oder auf die thermische Isolierschicht werden die Kollektorrohre verlegt, z. B. eine flexible Rohrleitung aus Polyethylen.
■ Damit die Kollektorrohre ihre Lage beibehalten, bis dies durch den ausgehärteten bzw. abgebundenen Mörtel gewährleistet ist, können sie festgelegt werden. Diese Lagefixierung kann z. B. erfolgen, indem an mehreren Stellen U-förmige Befestigungsbügel die Kollektorrohre übergreifen und in den Untergrund eingestochen werden. Oder es kann auf den Untergrund oder auf die erwähnte thermische Isolierschicht ein Gitter aufgelegt werden, z. B. in Form einer Bewehrungsmatte aus Stahl, wie sie für den Stahlbetonbau handelsüblich ist, und die Kollektorrohre werden an mehreren Stellen an das Gitter angebunden.
■ Eine Mörtelschicht wird über die Kollektorrohre verteilt, so dass diese in die Mörtelschicht eingebettet werden. So werden erstens die Kollektorrohre an die Mörtelschicht thermisch angebunden. Zweitens bewirkt der Mörtel nach seiner Aushärtung die entweder unterstützende oder auch alleinige Lagefixierung der Kollektorrohre, falls nämlich zuvor keine anderen Maßnahmen zu deren Lagefixierung getroffen worden waren. Die Mörtelschicht stellt drittens die erforderliche Tragfähigkeit für die Pflasterung sicher. Das die Mörtelschicht bildende Material kann zu Gunsten einer einfachen, schnellen und wirtschaftlichen Verarbeitung als aushärtende bzw. abbindende Vergussmasse vorliegen.
■ Auf die Mörtelschicht wird eine Ausgleichsschicht aufgebracht, die z. B. aus einem Zementleim bestehen kann. Durch die Ausgleichsschicht werden Unebenheiten in der Oberfläche der Mörtelschicht ausgeglichen und eine optimal vollflächige thermische Ankopplung der Pflastersteine an die Mörtelschicht bewirkt.
■ Die Pflastersteine werden auf die ausgehärtete oder vorzugsweise in die noch nicht ausgehärtete Ausgleichsschicht gelegt. Vorteilhaft werden Pflastersteine mit einer dunklen Farbgebung verwendet, die eine gute Strahlungsabsorption ermöglichen.
■ Die Kollektorrohre werden an eine Wärmepumpe angeschlossen und mit einem frostsicheren Fluid gefüllt. Falls mehrere Kollektorrohre in Form mehrerer separater Strömungskreise verlegt sind, können vorzugsweise durch entsprechende Ventile unterschiedliche Betriebsarten der Anordnung ermöglicht werden: so können die einzelnen Strömungskreise wahlweise parallel betrieben - also durchströmt - werden, um eine möglichst große Fluidmenge mit einem bestimmten Temperaturgewinn zu erhalten. Bei der Parallelschaltung ist es zudem möglich, lediglich bestimmte Strömungskreise zu benutzen und andere abzuschalten. Falls die Kollektorrohre mittels einer entsprechenden Schaltstellung der Ventile in Reihe geschaltet werden, kann der Temperaturgewinn in dem Fluid maximiert werden.

Ein Ausführungsbeispiel einer Pflasterung, die zur Gewinnung thermischer Energie dient, wird nachfolgend anhand der rein schematischen Darstellung näher erläutert.

Eine mehrschichtige Pflasterung ist insgesamt mit 1 bezeichnet. Als unterste Schicht der Pflasterung 1 ist eine thermische Isolierschicht 2 in Form von Platten aus geschäumtem Polystyrol vorgesehen. Versickerungsöffnungen 3 in der thermischen Isolierschicht 2 ermöglichen, dass Niederschläge in das unterhalb der thermischen Isolierschicht 2 befindliche Erdreich versickern können.

Oberhalb der thermischen Isolierschicht 2 sind Kollektorrohre 4 vorgesehen. Diese sind als spiralförmig verlegte Rohrleitung aus Polyethylen ausgestaltet. Die spiralförmige Verlegung bewirkt im Unterschied zu einer beispielsweise mäandernden Verlegung eine dichte Verlegung benachbarter Kollektorrohre 4, ohne dazu Biegestellen mit kleinen Biegeradien zu erfordern.

Damit die Kollektorrohre 4 ihre Lage beibehalten, ist zu ihrer Lagefixierung auf die thermische Isolierschicht 2 zunächst ein Gitter 5 in Form einer Bewehrungsmatte aus Stahl aufgelegt worden. Die darauf aufgelegten Kollektorrohre 4 sind an mehreren Stellen an das Gitter 5 angebunden.

Eine Mörtelschicht 6 in Form einer aushärtenden bzw. abbindenden Vergussmasse ist über die Kollektorrohre 4 verteilt worden, so dass diese von der Mörtelschicht 6 umhüllt sind.

Auf der Mörtelschicht 6 befindet sich eine Ausgleichsschicht 7 aus einem Zementleim, welche Unebenheiten in der Oberfläche der Mörtelschicht 6 ausgleicht. Pflastersteine 8 mit einer dunklen Farbgebung sind in die noch nicht ausgehärtete Ausgleichsschicht 7 gelegt.

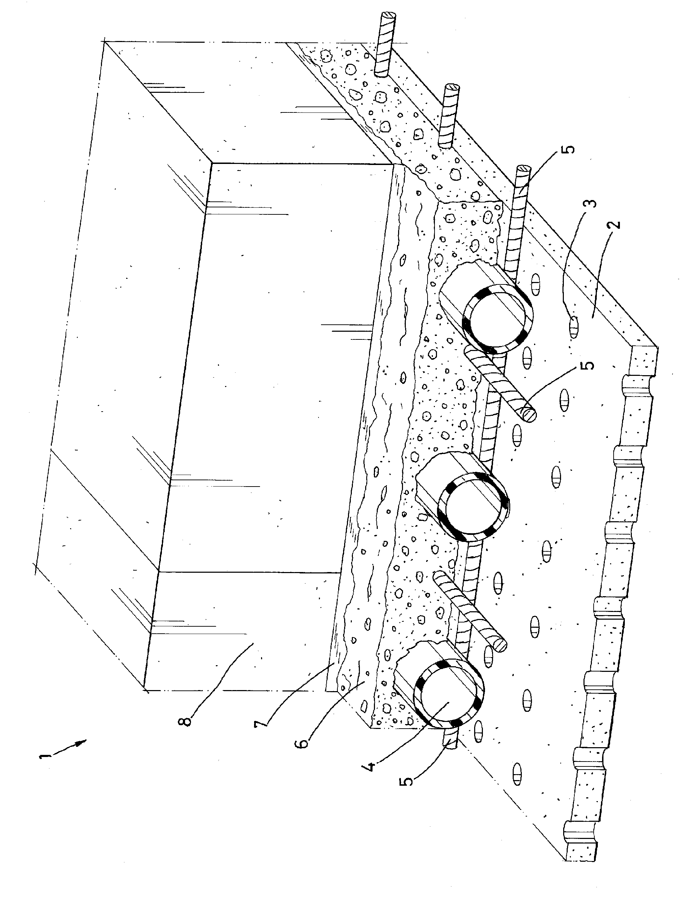

## Patentansprüche

1. Pflasterung (1) einer Bodenfläche,
wobei die Pflasterung (1) eine Mehrzahl von Pflastersteinen (8) aufweist,
**dadurch gekennzeichnet,**
**dass** die Pflasterung (1) Pflastersteine (8) aufweist, welche die Absorption einstrahlender Sonnenenergie unterstützend ausgestaltet sind,
und **dass** von einem Wärmeträger durchströmte Kollektorrohre (4) vorgesehen sind, welche an die Pflastersteine (8) thermisch angekoppelt sind,
derart, dass der Wärmeträger mittels der durch die Pflastersteine (8) gelangten Sonnenenergie erwärmbar ist.

2. Pflasterung nach Anspruch 1,
**dadurch gekennzeichnet,**
**dass** die Pflastersteine (8) die Absorption einstrahlender Sonnenenergie unterstützend ausgestaltet sind, indem sie wenigstens an ihrer Oberseite dunkel eingefärbt sind.

3. Pflasterung nach Anspruch 1 oder 2,
**dadurch gekennzeichnet,**
**dass** die Pflastersteine (8) die Absorption einstrahlender Sonnenenergie unterstützend ausgestaltet sind, indem sie Leitelemente aufweisen, welche die einstrahlende Sonnenenergie von der Oberseite nach unten leiten.

4. Pflasterung nach einem der vorhergehenden Ansprüche,
**dadurch gekennzeichnet,**
**dass** unterhalb der Pflastersteine (8) eine Mörtelschicht (6) vorgesehen ist, welche in einem wärmeleitenden Kontakt mit den Kollektorrohren (4) angeordnet ist.

5. Pflasterung nach Anspruch 4,
**dadurch gekennzeichnet,**
**dass** die Kollektorrohre (4) in die Mörtelschicht (6) eingebettet sind.

6. Pflasterung nach Anspruch 4 oder 5,
**dadurch gekennzeichnet,**
**dass** die Pflastersteine (8) an ihrer Unterseite eine Vergrößerung der Kontaktfläche zwischen den Pflastersteinen (8) und der Mörtelschicht (6) bewirkende, mittels Vorsprüngen und / oder Vertiefungen wie Nuten, Rippen oder Noppen vergrößerte Oberfläche aufweisen.

7. Pflasterung nach einem der Ansprüche 4 bis 6,
**dadurch gekennzeichnet,**
**dass** die Mörtelschicht (6) Wärme gut leitend ausgestaltet ist.

8. Pflasterung nach einem der Ansprüche 4 bis 7,
**dadurch gekennzeichnet,**
**dass** die Mörtelschicht (6) aushärtend eingestellt und derart ausgestaltet ist, dass sie nach ihrer Aushärtung eine tragfähige, eine dauerhafte Beibehaltung der Lage der Pflastersteine (8) sichernde Schicht unterhalb der Pflastersteine (8) bildet.

9. Pflasterung nach Anspruch 8,
**dadurch gekennzeichnet,**
**dass** die Mörtelschicht (6) derart ausgestaltet ist, dass sie nach dem Aushärten problemlos aufbrechbar ist.

10. Pflasterung nach einem der vorhergehenden Ansprüche,
**dadurch gekennzeichnet,**
**dass** unterhalb der Kollektorrohre (4) eine Wärmeverluste an das darunter befindliche Erdreich minimierende thermische Isolierschicht (2) vorgesehen ist.

11. Pflasterung nach Anspruch 10,
**dadurch gekennzeichnet,**
**dass** die thermische Isolierschicht (2) Durchbrechungen in Form von Versickerungsöffnungen (3) aufweist.

12. Pflasterung nach einem der vorhergehenden Ansprüche,
**dadurch gekennzeichnet,**
**dass** die Pflastersteine (8) Ausnehmungen aufweisen, in welche die Kollektorrohre (4) zumindest mit einem Anteil ihres Umfangs eintauchen.

13. Pflasterung nach Anspruch 12,
**dadurch gekennzeichnet,**
**dass** eine Wärmeleitmasse zwischen den Kollektorrohren (4) und den Pflastersteinen (8) angeordnet ist.

14. Pflasterung nach einem der vorhergehenden Ansprüche,
**dadurch gekennzeichnet,**
**dass** die Kollektorrohre (4) als mehrere separate Strömungskreise angeordnet sind.
